# NEW EUROPEAN PATENT SPECIFICATION

(11) **EP 0 587 246 B2**
(45) Date of publication and mention of the opposition decision: **29.03.2006**
(45) Mention of the grant of the patent: 30.07.1997
(21) Application number: 93202596.8
(22) Date of filing: 06.09.1993
(51) Int. Cl.: B01J 23/44

(54) **Hydroconversion catalyst**
Hydroumwandlungskatalysator
Catalyseur d'hydroconversion

(30) Priority: 08.09.1992 EP 92202728
(43) Date of publication of application: 16.03.1994
(73) Proprietor: SHELL INTERNATIONALE RESEARCH MAATSCHAPPIJ B.V., 2596 HR Den Haag (NL)
(72) Inventor: van Ballegoy, Carolus Maria, NL-1031 CM Amsterdam (NL); Stork, Willem Hartman Jurriaan, NL-1031 CM Amsterdam (NL); Gilson, Jean-Pierre, NL-1031 CM Amsterdam (NL)

(56) References cited:
- EP-A- 0 532 117
- US-A- 3 067 128
- US-A- 4 045 509

## Description

The present invention relates to a catalyst of use in hydroconversion processes, in particular to a catalyst containing palladium as a catalytically active component.

Catalysts comprising noble metals are known in the art for application in the hydroconversion of various hydrocarbon products. For example, UK patent No. 1 451 617 (GB 1 451 617) discloses a process for the preparation of medicinal oils in which a hydrocarbon mixture having a low aromatic content is contacted at elevated temperature and pressure with a catalyst comprising one or more noble metals from Group VIII on a carrier which contains 13 to 15% by weight of alumina, the remainder being silica. Catalysts specifically exemplified in GB 1 451 617 comprise platinum supported on silica-alumina carriers having surface areas ranging from 110 to 518 m²/g and a pore volumes ranging from 0.34 to 0.87 ml/g. The catalysts were prepared by impregnating the carrier material with an aqueous solution of chloroplatinic acid.

It has now been found that the aforementioned catalysts described and exemplified in GB 1 451 617 are suitable for use in the hydroconversion of high boiling range hydrocarbons, produced by the Fischer-Tropsch process, as a means of preparing middle distillates.

However, surprisingly, there has also been found a novel platinum-containing catalyst composition which is active as a hydroconversion catalyst. It has been found that a catalyst comprising platinum supported on a silica-alumina carrier, which carrier has been prepared from an amorphous silica-alumina having a pore volume of at least 1.0 ml/g exhibits a particularly high selectivity to middle distillates when applied in the hydroconversion of hydrocarbons produced by the Fischer-Tropsch synthesis. The catalyst has also been found to be particularly active in the hydroconversion of Fischer-Tropsch hydrocarbons when prepared by a process comprising impregnating the carrier with a platinum salt in the presence of a liquid under acidic conditions. Similar platinum-containing catalysts having a carrier prepared from an amorphous silica-alumina having a pore volume of below 1.0 ml/g have been found to exhibit a higher selectivity to naphtha fractions, when applied in the hydroconversion of Fischer-Tropsch hydrocarbons. The aforementioned findings form the subject matter of pending UK patent applications Nos. 9119494.4, 9119495.1, 9119504.0 and 9119505.7 (equivalent to European patent applications publication Nos. 0532117, 0532116, 0532118 and 0537815 respectively) .

Surprisingly, it has now been found that palladium- containing catalysts comprising a carrier prepared from an amorphous silica-alumina starting material having a pore volume of at least 1.0 ml/g are also excellent catalysts for use in hydroconversion processes.

Accordingly, the present invention provides a catalyst comprising palladium supported on a silica-alumina carrier, which carrier has been prepared from an amorphous silica alumina starting material having a pore volume of at least 1.0 ml/g, and comprising alumina in an amount in the range of from 5 to 30 % by weight.

The novel catalyst is of use in hydroconversion processes. The term "hydroconversion" is used herein in its broadest sense, as a reference to conversion processes occurring in the presence of hydrogen and ranging in severity, for example, from hydrocracking to mild hydrogenation processes.

The carrier for the catalyst of the present invention is amorphous silica-alumina. The term "amorphous" indicates a lack of crystal structure, as defined by X-ray diffraction, in the carrier material, although some short range ordering may be present. Amorphous silica-alumina suitable for use in preparing the catalyst is available commercially. Alternatively, the silica-alumina may be prepared by precipitating alumina or a silica hydrogel and subsequently drying and calcining the resulting material, as described in GB 1 451 617.

The catalyst may comprise any suitable amorphous silica-alumina. The amorphous silica-alumina contains alumina in an amount in the range of from 5 to 30% by weight, more preferably from 10 to 20% by weight, especially from 12 to 15% by weight.

For the catalyst of the present invention, it is important that the pore volume of the amorphous silica-alumina starting material be at least 1.0 ml/g. For the purposes of this specification, all pore volumes quoted in relation to the catalyst of the present invention are references to pore volumes measured by a method involving the uptake of water into the pores of the material, often referred to as the incipient wetness method, and are generally indicated as pore volume (H₂O).

A typical procedure for determining the pore volume (H₂O) of a catalyst or carrier material comprises drying the material at a temperature of about 500°C; weighing the dried material; immersing the material in water for a period of about 15 minutes; removing the material from the water; removing the water on the surface of the material by means of a centrifuge; and weighing the resulting material. The pore volume of the material is determined from the difference between the weight of the dried material and the weight of the resulting material.

The pore volume of the amorphous silica-alumina is preferably in the range of from 1.0 to 2.0 ml/g, more preferably from 1.0 to 1.5 ml/g.

In addition to silica-alumina, the carrier may also comprise one or more binder materials. Suitable binder materials include inorganic oxides. Both amorphous and crystalline binders may be applied. Examples of binder materials comprise silica, alumina, clays, magnesia, titania, zirconia and mixtures thereof. Silica and alumina are preferred binders, with alumina being especially preferred. The binder, if incorporated in the catalyst, is preferably present in an amount of from 5 to 50% by weight, more preferably from 15 to 30% by weight, on the basis of total weight of the carrier.

The catalyst of the present invention comprises palladium as a catalytically active component. Palladium is preferably present in an amount in the range of from 0.05 to 5.0% by weight, more preferably from 0.1 to 2.0% by weight, especially from 0.2 to 1.0% by weight, on the basis of total weight of carrier in the catalyst.

Palladium may be present in the catalyst as the only catalytically active metal. Alternatively, the catalyst may comprise one or more other catalytically active metals. If a second metal is present, it is preferably a noble metal from Group VIII of the Periodic Table, specifically platinum or nickel. A preferred combination of metals for use in the catalyst of the present invention is palladium and platinum. The second metal if present, is preferably present in an amount in the range of from 0.05 to 5.0% by weight, more preferably from 0.1 to 2.0% by weight, especially 0.2 to 1.0% by weight, on the basis of total weight of carrier in the catalyst.

The catalyst of the present invention may be prepared by any of the suitable catalyst preparation techniques known in the art.

The carrier may be prepared from the amorphous silica-alumina starting material by methods known to the person skilled in the art. A preferred method for the preparation of the carrier comprises mulling a mixture of the amorphous silica-alumina and a suitable liquid, extruding the mixture and drying the resulting extrudates.

The mixture to be extruded should, preferably, have a solids content in the range of from 20 to 60% by weight.

The liquid for inclusion in the mixture may be any of the suitable liquids known in the art. Examples of suitable liquids include water; alcohols, such as methanol, ethanol and propanol; ketones, such as acetone: aldehydes, such as propanal, and aromatic liquids, such as toluene. A most convenient and preferred liquid is water.

To obtain strong extrudates, the mixture preferably includes a peptising agent. Suitable peptising agents are acidic compounds, for example inorganic acids such as aqueous solutions of hydrogen fluoride, hydrogen bromide and hydrogen chloride, nitric acid, nitrous acid and perchloric acid. Preferably, the peptising agent is an organic acid, for example a mono- or dicarboxylic acid. Preferred organic acids include acetic acid, propionic acid and butanoic acid. Acetic acid is a most preferred peptising agent.

The amount of peptising agent included in the mixture should be sufficient to fully peptise the alumina present in the carrier material, and can be readily determined by the pH of the mixture. During mulling, the pH of the mixture should preferably lie in the range of from 1 to 6, more preferably from 4 to 6.

To improve the flow properties of the mixture, it is preferred to include one or more flow improving agents and/or extrusion aids in the mixture prior to extrusion. Suitable additives for inclusion in the mixture include fatty amines, quaternary ammonium compounds, aliphatic mono-carboxylic acids, ethoxylated alkyl amines, polyvinyl pyridine, and sulphoxonium, sulphonium, phosphonium and iodonium compounds, alkylated aromatic compounds, acyclic mono-carboxylic acids, fatty acids, sulphonated aromatic compounds, alcohol sulphates, ether alcohol sulphates, sulphated fats and oils, phosphonic acid salts, polyoxyethylene alkylphenols, polyoxyethylene alcohols, polyoxyethylene alkylamines, polyoxyethylene alkylamides, polyacrylamides, polyols and acetylenic glycols. Preferred agents are sold under the trademarks Nalco and Superfloc.

The flow improving agents/extrusion aids are preferably present in the mixture in a total amount in the range of from 1 to 20% by weight, more preferably from 2 to 10% by weight, on the basis of the total weight of the mixture.

In principle, the components of the mixture may be combined in any order, and the mixture mulled. Preferably, the amorphous silica-alumina and the binder, if present, are combined and the mixture mulled. Thereafter, the liquid and, if present, the peptising agent are added and the resulting mixture further mulled. Finally, any flow improving agents/extrusion aids to be induded are added and the resulting mixture mulled for a final period of time.

Typically, the mixture is mulled for a period of from 10 to 120 minutes, preferably from 15 to 90 minutes. During the mulling process, energy is input into the mixture by the mulling apparatus. The rate of energy input into the mixture is typically from 0.05 to 50 Wh/min/kg, preferably from 0.5 to 10 Wh/min/kg. The mulling process may be carried out over a broad range of temperature, preferably from 15 to 50 °C. As a result of the energy input into the mixture during the mulling process, there will be a rise in the temperature of the mixture during the mulling. The mulling process is conveniently carried out at ambient pressure. Any suitable, commercially available mulling apparatus may be employed.

Once the mulling process has been completed, the resulting mixture is then extruded. Extrusion may be effected using any conventional, commercially available extruder. In particular, a screw-type extruding machine may be used to force the mixture through orifices in a suitable dieplate to yield extrudates of the desired form. The strands formed upon extrusion may be cut to the desired length.

The extrudates may have any suitable form known in the art, for example cylindrical, hollow cylindrical, multilobed or twisted multilobed. A preferred shape for the catalyst particles of the present invention is cylindrical. Typically, the extrudates have a nominal diameter of from 0.5 to 5 mm, preferably from 1 to 3 mm.

After extrusion, the extrudates are dried. Drying may be effected at an elevated temperature, preferably up to 800 °C, more preferably up to 300 °C. The period for drying is typically up to 5 hours, preferably from 30 minutes to 3 hours.

Preferably, the extrudates are calcined after drying. Calcination is effected at an elevated temperature, preferably up to 1000 °C, more preferably from 200 °C to 1000 °C, most preferably from 300 ° to 800 °C. Calcination of the extrudates is typically effected for a period of up to 5 hours, preferably from 30 minutes to 4 hours.

Once the carrier has been prepared, palladium is deposited onto the carrier material. Any of the suitable methods known in the art may be employed, for example ion exchange, competitive ion exchange, comulling and impregnation. A most preferred method is impregnation, in which the carrier is contacted with a palladium compound in the presence of a liquid.

Accordingly, in a further aspect, the present invention provides a process for the preparation of a catalyst as hereinbefore described, which process comprises preparing a carrier from an amorphous silica-alumina starting material having a pore volume of at least 1.0 ml/g and impregnating the carrier so-formed with palladium by contacting the carrier with a palladium compound in the presence of a liquid.

Most conveniently, the palladium compound and the liquid are selected so that the compound is soluble in the liquid and the carrier is contacted with a solution of the palladium compound. Suitable liquids for use in the impregnation are both organic liquids, for example alcohols and ethers, and inorganic liquids, for example water. Water is a most convenient and especially preferred liquid.

Any suitable palladium compound may be used, with preference being given to compounds soluble in the selected liquid. Suitable compounds include both organic and inorganic compounds. Examples of suitable compounds are palladium dibromide, palladium dichloride, palladium nitrate, palladium diflouride, palladium trifluoride and palladium sulphate.

Preferably, the palladium is deposited onto the carrier by means of an acid impregnation, in which the carrier is contacted with a palladium compound in the presence of a liquid under acidic conditions. Preferably, the acidic conditions are such that the pH is no greater than 4.0, more preferably no greater than 3.0.

Conveniently, the catalyst is prepared by an impregnation using a solution of an acidic palladium compound, the palladium compound providing both a source for the palladium and giving rise to the required conditions of acidity. A preferred acid compound for this function is palladium dichloride.

If an acidic palladium compound is not used in the impregnation of the carrier, the impregnation is preferably effected in the presence of an additional acid. If desired, both an acidic palladium compound and an additional acid are present during the impregnation of the carrier. Suitable acids for use during the impregnation include both organic and inorganic acids, for example mono- and dicarboxylic acids, hydrochloric acid, sulphuric acid and nitric acid. Hydrochloric acid is a most suitable acid.

If the catalyst of the present invention is prepared by means of impregnation in the presence of both an acidic palladium compound and an additional acid, the additional acid is preferably present in an amount in excess of the amount of the acidic palladium compound, the molar ratio of additional acid to acidic palladium compound preferably being in the range of from 2 to 30, more preferably from 5 to 25.

A preferred impregnation technique for use in the process of the present invention is the pore volume impregnation technique, in which the carrier is contacted with a solution of the palladium compound, the solution being present in a sufficient volume so as to substantially just fill the pores of the carrier material. A convenient method for effecting impregnation is by spraying the carrier with the requisite quantity of the solution.

After impregnation, the resulting catalyst is preferably dried and preferably calcined. The conditions for drying and calcining are as set out hereinbefore.

If a catalyst comprising a combination of catalytically active metals is to be prepared, each additional metal may be deposited on the carrier either simultaneously with the deposition of palladium or by means of a separate treatment. Suitable methods for depositing an additional metal onto the carrier are those as described hereinbefore in relation to palladium

The catalyst of the present invention is active as a hydroconversion catalyst and may be used in such processes as alkane hydroisomerisation and hydrocracking. In addition, the catalyst may be applied in the selective hydroconversion of high boiling range hydrocarbons to prepare middle distillates, especially the hydroconversion of high boiling range products of the Fischer-Tropsch synthesis process.

In the Fischer-Tropsch synthesis process, a gaseous mixture comprising carbon monoxide and hydrogen is contacted with a suitable catalyst at an elevated temperature and pressure, to yield hydrocarbons. Preferably, the catalyst employed comprises a metal from the iron group of Group VIII of the Periodic Table of elements as catalytically active component, optionally in association with one or more promoters. A most suitable Fischer-Tropsch catalyst comprises cobalt as a catalytically active component and zirconium as a promoter supported on a refractory oxide carrier, for example alumina, silica, titania, zirconia or mixtures thereof.

The high boiling range hydrocarbon products of the Fischer-Tropsch synthesis may then be contacted with the catalyst of the present invention in the presence of hydrogen and catalytically hydroconverted to yield the desired middle distillates. Typical process conditions for carrying out the hydroconversion stage are a temperature of from 175 to 400 °C, preferably from 250 to 375 °C; a hydrogen gas hourly space velocity of from 100 to 10000 Nl/l/hr, preferably from 500 to 5000 Nl/l/hr; a hydrogen partial pressure of from 10 to 250 bars, pref-erably from 25 to 150 bars; a space velocity of from 0.1 to 5 kg/l/hr, preferably from 0.25 to 2 kg/l/h; and a hydrogen to oil ratio of from 100 to 5000 Nl/kg, preferably from 250 to 2500 Nl/kg.

Typical processes in which the catalyst of the present invention may be applied are disclosed in GB-A-2 077 289, EP-A-0 127 220 and EP-A-0 147 873.

The present invention is further described in the following illustrative example.

### EXAMPLE

### a) Carrier Preparation

A mixture comprising amorphous silica-alumina (ex Grace Davison, pore volume (H₂O) 1.10 ml/g, 13% wt alumina (dry basis); 1834.9g) and alumina (ex Criterion Catalyst Co. ; 554.8g) was placed in a mulling machine and mulled for a period of 10 minutes. Acetic acid (10% wt aqueous solution; 200.0g) and water (2190.3g) were added and the resulting mixture mulled for a further 10 minutes. Thereafter, polyacrylamide (Superfloc A1839, 2% wt aqueous solution; 40.0g) was added and mulling continued for a further 10 minutes. Finally, polyelectrolyte (Nalco, 4% wt aqueous solution; 80.0g) was added and the mixture mulled for a final period of 5 minutes.

The resulting mixture was extruded using a 2.25" Bonnot extruder through a cylindrical dieplate, yielding 1.7mm diameter cylindrical extrudates. The resulting extrudates were dried at a temperature of 120 °C for 2 hours and subsequently calcined at a temperature of 600 °C for 2 hours.

### b) Catalyst Preparation

An aqueous solution was prepared by dissolving palladium dichloride (0.27g) and hydrochloric acid (35% aqueous solution, 0.32g) in water (19g). The solution had a pH of below 1. The cylindrical carrier particles were impregnated using this aqueous solution via the Pore Impregnation technique to give a final palladium loading on the carrier of 0.8% wt. The thus impregnated carrier particles were dried and then calcined at a temperature of 500 °C for a period of 1 hour to yield the final catalyst.

### c) Alkane Hydroisomerisation

The catalyst prepared in (b) hereinabove was tested for activity as a hydroconversion catalyst using, as a representative test the preparation of iso-C₇ compounds from n-heptane. The test procedure was as follows:
A sample of the catalyst prepared as in (b) hereinabove was loaded into a reactor. The catalyst was reduced in an atmosphere of hydrogen at a temperature of 400°C. Thereafter, the reduced catalyst was contacted with a feed mixture comprising n-heptane and hydrogen in a molar ratio of hydrogen to n-heptane of 4.0, at a weight hourly space velocity of 1.0 kg/l/hr, at a pressure of 30 bars and a temperature of 340 °C. A conversion of n-heptane of 67% wt was recorded with a selectivity to iso-C₇ compounds of 89% wt.

## Claims

1. A catalyst comprising palladium supported on a silica-alumina carrier, which carrier has been prepared from an amorphous silica-alumina starting material having a pore volume of at least 1.0 ml/g and comprising alumina in an amount in the range of from 5 to 30% by weight.

2. A catalyst according to claim 1, **characterized in that** the amorphous silica-alumina comprises alumina in an amount in the range of from 10 to 20% by weight, preferably 12 to 15% by weight.

3. A catalyst according to either of claims 1 or 2, **characterised in that** the pore volume of the amorphous silica-alumina is in the range of from 1.0 to 2.0 ml/g, preferably from 1.0 to 1.5 ml/g.

4. A catalyst according to any one of claims 1 to 3, **characterised in that** the carrier comprises a binder, preferably selected from silica, alumina, clays, titania, zirconia and mixtures thereof, more preferably alumina.

5. A catalyst according to claim 4, **characterised in that** the binder is present in an amount in the range of from 5 to 50% by weight, preferably from 15 to 30% by weight, on the basis of total weight of the carrier.

6. A catalyst according to any preceding claim, **characterised in that** palladium is present in an amount in the range of from 0.05 to 5% by weight, preferably 0.1 to 2.0% by weight, more preferably from 0.2 to 1.0% by weight, on the basis of total weight of the carrier.

7. A catalyst according to any preceding claim, **characterised in that** the catalyst comprises, in addition to palladium, one or more other catalytically active metals, preferably selected from platinum and nickel, especially platinum.

8. A catalyst according to claim 7, **characterised in that** each additional catalytically active metal is present in an amount in the range of from 0.05 to 5% by weight, preferably 0.1 to 2.0% by weight, more preferably from 0.2 to 1.0% by weight, on the basis of total weight of the carrier.

9. A process for the preparation of a catalyst as defined in any of the preceding claims, which process comprises preparing a carrier from an amorphous silica-alumina having a pore volume of at least 1.0 ml/g and impregnating the carrier so-formed with palladium by contacting the carrier with a palladium compound in the presence of a liquid.

10. A process according to claim 9, **characterised in that** the carrier is prepared by a process comprising mulling a mixture comprising amorphous silica-alumina and a liquid, extruding the resulting mixture and drying the extrudates so-obtained.

11. A process according to either of claims 9 or 10, **characterised in that** the mixture comprises a peptising agent, preferably acetic acid.

12. A process according to any one of claims 9 to 11, **characterised in that** the pH of the mixture prior to extrusion is in the range of from 1 to 6, preferably from 4 to 6.

13. A process according to any one of claims 9 to 12, **characterised in that** the mixture comprises a flow improving agent or an extrusion aid.

14. A process according to any one of claims 9 to 13, **characterised in that** the carrier is calcined prior to impregnation, calcining preferably being effected at a temperature of up to 1000 °C. more preferably from 200 to 1000 °C, especially from 300 to 800 °C.

15. A process according to any one of claims 9 to 14, **characterised in that** the carrier is contacted with the palladium compound in the presence of the liquid under acidic conditions, preferably at a pH of no greater than 4.0, more preferably no greater than 3.0.

16. A process according to any one of claims 9 to 15, **characterised in that** the carrier is contacted with the palladium compound in the presence of an acid selected from monocarboxylic acids, dicarboxylic acids, hydrochloric acid, sulphuric acid and nitric acid.

17. A process according to any one of claims 9 to 16, **characterised in that** the palladium compound is selected from palladium dibromide, palladium dichloride, palladium nitrate, palladium difluoride, palladium trifluoride and palladium sulphate.

18. The use of a catalyst according to any one of claims 1 to 8 as a hydroconversion catalyst, in particular in the hydroconversion of hydrocarbon products of the Fischer-Tropsch synthesis or in the hydroisomerisation of alkanes.

## Patentansprüche

1. Katalysator, enthaltend auf einem aus einem amorphen Siliciumoxid-Aluminiumoxid-Ausgangsmaterial mit einem Porenvolumen von mindestens 1,0 ml/g und enthaltend Aluminiumoxid in einer Menge von 5 bis 30 Gew.-% hergestellten Siliciumoxid-Aluminiumoxid-Träger geträgertes Palladium.

2. Katalysator nach Anspruch 1, **dadurch gekennzeichnet, daß** das amorphe Siliciumoxid-Aluminiumoxid Aluminiumoxid in einer Menge von 10 bis 20 Gew.-%, bevorzugt von 12 bis 15 Gew.-%, enthält.

3. Katalysator nach Anspruch 1 oder 2, **dadurch gekennzeichnet, daß** das Porenvolumen des amorphen Siliciumoxid-Aluminiumoxids 1,0 bis 2,0 ml/g, bevorzugt, 1,0 bis 1,5 ml/g, beträgt.

4. Katalysator nach einem der Ansprüche 1 bis 3, **dadurch gekennzeichnet, daß** der Träger ein bevorzugt unter Siliciumoxid, Aluminiumoxid, Tonen, Titanoxid, Zirkoniumoxid und deren Gemischen ausgewähltes Bindemittel, besonders bevorzugt Aluminiumoxid, enthält.

5. Katalysator nach Anspruch 4, **dadurch gekennzeichnet, daß** das Bindemittel in einer Menge im Bereich von 5 bis 50 Gew.-%, bevorzugt von 15 bis 30 Gew.-%, bezogen auf das Gesamtgewicht des Trägers, vorliegt.

6. Katalysator nach einem der vorhergehenden Ansprüche, **dadurch gekennzeichnet, daß** Palladium in einer Menge von 0,05 bis 5 Gew.-%, bevorzugt 0,1 bis 2,0 Gew.-%, besonders bevorzugt 0,2 bis 1,0 Gew.-%, bezogen auf das Gesamtgewicht des Trägers, vorliegt.

7. Katalysator nach einem der vorhergehenden Ansprüche, **dadurch gekennzeichnet, daß** der Katalysator neben Palladium ein oder mehrere andere, bevorzugt unter Platin und Nickel ausgewählte katalytisch aktive Metalle, insbesondere Platin, enthält.

8. Katalysator nach Anspruch 7, **dadurch gekennzeichnet, daß** jedes zusätzliche katalytisch aktive Metall in einer Menge im Bereich von 0,05 bis 5 Gew.-%, bevorzugt 0,1 bis 2,0 Gew.-%, besonders bevorzugt 0,2 bis 1,0 Gew.-%, bezogen auf das Gesamtgewicht des Trägers, vorliegt.

9. Verfahren zur Herstellung eines Katalysators nach einem der vorhergehenden Ansprüche, bei dem man aus einem amorphen Siliciumoxid-Aluminiumoxid mit einem Porenvolumen von mindestens 1,0 ml/g einen Träger herstellt und den so hergestellten Träger durch Inberührungbringen des Trägers mit einer Palladiumverbindung in Gegenwart einer Flüssigkeit mit Palladium imprägniert.

10. Verfahren nach Anspruch 9, **dadurch gekennzeichnet, daß** man den Träger nach einem Verfahren herstellt, bei dem man ein amorphes , Siliciumoxid-Aluminiumoxid und eine Flüssigkeit enthaltendes Gemisch im Kollergang mahlt, das erhaltene Gemisch extrudiert und die so erhaltenen Extrudate trocknet.

11. Verfahren nach Anspruch 9 oder 10, **dadurch gekennzeichnet, daß** man dem Gemisch ein Peptisierungsmittel, bevorzugt Essigsäure zusetzt.

12. Verfahren nach einem der Ansprüche 9 bis 11, **dadurch gekennzeichnet, daß** der pH-Wert des Gemischs vor der Extrusion im Bereich von 1 bis 6, bevorzugt 4 bis 6, liegt.

13. Verfahren nach einem der Ansprüche 9 bis 12, **dadurch gekennzeichnet, daß** man dem Gemisch einen Fließverbesserer oder ein Extrudierhilfsmittel zusetzt.

14. Verfahren nach einem der Ansprüche 9 bis 13, **dadurch gekennzeichnet, daß** man den Träger vor dem Imprägnieren calciniert, und zwar bevorzugt bei einer Temperatur von bis zu 1000°C, besonders bevorzugt von 200 bis 1000°C, insbesondere von 300 bis 800°C.

15. Verfahren nach einem der Ansprüche 9 bis 14, **dadurch gekennzeichnet, daß** man den Träger in Gegenwart einer Flüssigkeit unter sauren Bedingungen mit der Palladiumverbindung in Berührung bringt, wobei der pH-Wert bevorzugt höchstens 4,0, besonders bevorzugt höchstens 3,0 beträgt.

16. Verfahren nach einem der Ansprüche 9 bis 15, **dadurch gekennzeichnet, daß** man den Träger in Gegenwart einer Säure, ausgewählt aus Monocarbonsäuren, Dicarbonsäuren, Chlorwasserstoffsäure, Schwefelsäure und Salpetersäure mit der Palladiumverbindung in Berührung bringt.

17. Verfahren nach einem der Ansprüche 9 bis 16, **dadurch gekennzeichnet, daß** man die Palladiumverbindung unter Palladiumdibromid, Palladiumdichlorid, Palladiumnitrat, Palladiumdifluorid, Palladiumtrifluorid und Palladiumsulfat auswählt.

18. Verwendung eines Katalysators gemäß einem der Ansprüche 1 bis 8 als Wasserstoffumwandlungskatalysator, insbesondere bei der Wasserstoffumwandlung von Kohlenwasserstoffprodukten der Fischer-Tropsch-Synthese oder der Hydroisomerisierung von Alkanen.

## Revendications

1. Catalyseur comprenant du palladium porté par un support d'alumine-silice, lequel support a été préparé à partir d'une matière de départ du type alumine-silice amorphe possédant un volume des pores d'au moins 1,0 ml/g et comprenant de l'alumine en une proportion qui varie de 5 à 30% en poids.

2. Catalyseur suivant la revendication 1, **caractérisé en ce que** l'alumine-silice amorphe comprend de l'alumine en une proportion qui varie de 10 à 20% en poids, de preference de 12 à 15% en poids.

3. Catalyseur suivant l'une quelconque des revendications 1 et 2, **caractérisé en ce que** le volume des pores de l'alumine-silice amorphe varie de 1,0 à 2,0 ml/g, de préférence, de 1,0 à 1,5 ml/g.

4. Catalyseur suivant l'une quelconque des revendications 1 à 3, **caractérisé en ce que** le support comprend un liant, de préférence, choisi parmi la silice, l'alumine, des argiles, l'oxyde de titane, la zircone et leurs mélanges, plus avantageusement l'alumine.

5. Catalyseur suivant la revendication 4, **caractérisé en ce que** le liant est présent en une proportion qui varie de 5 à 50% en poids, de préférence, de 15 à 30% en poids, sur base du poids total du support.

6. Catalyseur suivant l'une quelconque des revendications précédentes, **caractérisé en ce que** le palladium est présent en une proportion qui varie de 0,05 à 5% en poids, de préférence, de 0,1 à 2,0 % en poids, plus avantageusement encore, de 0,2 à 1,0% en poids, sur base du poids total du support.

7. Catalyseur suivant l'une quelconque des revendications précédentes, **caractérisé en ce qu'**il comprend, en plus du palladium, un ou plusieurs autres métaux catalytiquement actifs, de préférence, choisis parmi le platine et le nickel, plus particulièrement le platine.

8. Catalyseur suivant la revendication 7, **caractérisé en ce que** chaque métal catalytiquement actif supplémentaire est présent en une proportion qui varie de 0,05 à 5% en poids, de préférence, de 0,1 à 2,0% en poids, plus avantageusement encore de 0,2 à 1,0% en poids, sur base du poids total du support.

9. Procédé de préparation d'un catalyseur suivant l'une quelconque des revendications précédentes, **caractérisé en ce que** l'on prépare un support à partir d'une alumine-silice amorphe possédant un volume des pores d'au moins 1,0 ml/g et on imprègne le support ainsi formé de palladium par mise en contact du support avec un composé du palladium en présence d'un liquide.

10. Procédé suivant la revendication 9, **caractérisé en ce que** l'on prépare le support par une méthode comprenant le broyage d'un mélange contenant de l'alumine-silice amorphe et un liquide, on extrude le mélange obtenu et on sèche les extrudats ainsi formés.

11. Procédé suivant l'une quelconque des revendications 9 et 10, **caractérisé en ce que** le mélange comprend un agent de peptisation, de préférence, l'acide acétique.

12. Procédé suivant l'une quelconque des revendications 9 à 11, **caractérisé en ce que** le pH du mélange avant l'extrusion fluctue de 1 à 6, de préférence, de 4 à 6.

13. Procédé suivant l'une quelconque des revendications 9 à 12, **caractérisé en ce que** le mélange comprend un agent d'amélioration de l'écoulement ou un adjuvant d'extrusion.

14. Procédé suivant l'une quelconque des revendications 9 à 13, **caractérisé en ce que** l'on calcine le support avant l'imprégnation, la calcination étant, de préférence, entreprise à une température s'élevant jusqu'à 1000°C, plus avantageusement, de 200 à 1000°C, plus spécialement encore, de 300 à 800°C.

15. Procédé suivant l'une quelconque des revendications 9 à 14, **caractérisé en ce qu'**on met le support en contact avec le composé de palladium en présence d'un liquide dans des conditions acides, de préférence à un pH non supérieur à 4,0, plus avantageusement non supérieur à 3,0.

16. Procédé suivant l'une quelconque des revendications 9 à 15, **caractérisé en ce que** l'on met le support en contact avec le composé de palladium en présence d'un acide choisi parmi les acides monocarboxyliques, les acides dicarboxyliques, l'acide chlorhydrique, l'acide sulfurique et l'acide nitrique.

17. Procédé suivant l'une quelconque des revendications 9 à 16, **caractérisé en ce que** l'on choisit le composé du palladium parmi le dibromure de palladium, le dichlorure de palladium, le nitrate de palladium, le difluorure de palladium, le trifluorure de palladium et le sulfate de palladium.

18. Utilisation d'un catalyseur suivant l'une quelconque des revendications 1 à 8 à titre de catalyseur d'hydroconversion, plus particulièrement, en vue de l'hydroconversion de produits hydrocarbonés de la synthèse de Fischer-Tropsch ou de l'hydroisomérisation d'alcanes.
